# EUROPÄISCHE PATENTSCHRIFT

(11) **EP 1 053 972 B1**
(45) Veröffentlichungstag und Bekanntmachung des Hinweises auf die Patenterteilung: **25.10.2006**
(21) Anmeldenummer: 00109824.3
(22) Anmeldetag: 09.05.2000
(51) Int. Cl.: B66F 9/24

(54) **Flurförderzeug mit einem Batterieblock**
Industrial truck with a battery pack
Chariot de manutention avec un bloc de batterie

(30) Priorität: 12.05.1999 DE 19922137
(43) Veröffentlichungstag der Anmeldung: 22.11.2000
(73) Patentinhaber: STILL S.A.R.L., 77100 Meaux (FR)
(72) Erfinder: Petitfrere, Claire, 60500 Chantilly (FR); Antunes-Ferreira, Paulo, 60160 Montataire (FR)
(74) Vertreter: Kasseckert, Rainer

(56) Entgegenhaltungen:
- EP-A- 0 233 638
- WO-A-85/00147
- DE-A- 3 832 840
- DE-A- 3 902 339
- US-A- 4 387 334
- PATENT ABSTRACTS OF JAPAN vol. 2000, no. 14, 5. März 2001 (2001-03-05) -& JP 2000 319000 A (KOMATSU LTD), 21. November 2000 (2000-11-21)
- PATENT ABSTRACTS OF JAPAN vol. 1998, no. 12, 31. Oktober 1998 (1998-10-31) -& JP 10 182098 A (NIPPON YUSOKI CO LTD), 7. Juli 1998 (1998-07-07)

## Beschreibung

Die Erfindung betrifft ein Flurförderzeug mit einem elektrischen Antriebssystem und einem wiederaufladbaren Batterieblock, wobei das Antriebssystem eine Steuereinheit aufweist, welche Steuereinheit eine Leistungselektronikeinheit zur Versorgung von Antriebaggregaten und einen Mikroprozessor zur Ansteuerung der Leistungselektronikeinheit umfasst, und der Batterieblock einen Datenspeicher aufweist.

Flurförderzeuge, beispielsweise Gabelstapler oder Lagertechnikgeräte, sind häufig mit elektrischen Antriebssystemen ausgerüstet. Die Steuereinheit dieser Antriebssysteme weist eine Leistungselektronikeinheit auf, welche die verschiedenen Antriebsaggregate mit Energie versorgt. Die Leistungselektronikeinheit wird von einem in die Steuereinheit integrierten Mikroprozessor in Abhängigkeit von den Vorgaben durch eine Bedienperson und in Abhängigkeit von verschiedenen Zustandsparametern des Flurförderzeugs angesteuert.

Flurförderzeuge der genannten Art weisen darüber hinaus einen mit Akkumulatorzellen bestückten wiederaufladbaren Batterieblock auf. Das Aufladen des Batterieblocks kann erfolgen, während sich der Batterieblock im Fahrzeug befindet, wobei ein externes oder ein im Flurförderzeug integriertes Ladegerät an den Batterieblock angeschlossen ist. Während des in der Regel einige Stunden andauernden Ladevorgangs ist ein Betrieb des Flurförderzeugs nicht möglich. Lediglich zur Durchführung von Wartungsarbeiten oder bei einem Defekt des Batterieblocks wird der Batterieblock aus dem Flurförderzeug entnommen.

Wenn Stillstandszeiten des Flurförderzeugs vermieden werden sollen, ist es möglich, einen entladenen Batterieblock aus dem Flurförderzeug zu entfernen und durch einen aufgeladenen Batterieblock zu ersetzen. Das Aufladen mittels des Ladegeräts findet in diesem Fall statt, während sich der Batterieblock außerhalb des Flurförderzeugs befindet.

Die längste Lebensdauer eines Batterieblocks kann erreicht werden, wenn bestimmte Zustandsparameter des Batterieblocks fortlaufend erfaßt und gespeichert werden und die Lade- und Entladevorgänge des Batterieblocks an diese Zustandsparameter angepaßt werden. Hierzu sind Batterie-Kontrollgeräte bekannt, die im Batterieblock integriert sind und in der Regel einen Mikroprozessor und einen Datenspeicher enthalten. Über Datenleitungen ist ein solches Batterie-Kontrollgerät mit dem Flurförderzeug selbst und gegebenenfalls mit einem externen Ladegerät verbindbar. Ein derartiges System ist in der DE 39 02 339 A1 gezeigt. Der Herstellungsaufwand und damit die Anschaffungskosten von Batterie-Kontrollgeräten dieser Art sind jedoch relativ hoch, so daß sie in der Praxis selten Verwendung finden.

Der Erfindung liegt daher die Aufgabe zugrunde, ein Flurförderzeug zur Verfügung zu stellen, das ein mit geringerem Aufwand herstellbares System zur Kontrolle von Zustandsparametern des Batterieblocks aufweist.

Diese Aufgabe wird erfindungsgemäß dadurch gelöst, daß das Antriebssystem derart mit dem Batterieblock verbindbar ist, daß die in dem Datenspeicher enthaltenen Daten mittels der Steuereinheit lesbar sind und der Datenspeicher durch Signale der Steuereinheit beschreibbar ist. In dem Batterieblock befindet sich somit lediglich ein Datenspeicher, jedoch kein Mikroprozessor zum Auswerten oder Bereitstellen von Daten. Stattdessen wird erfindungsgemäß der in der Steuereinheit des Flurförderzeugs ohnehin vorhandene Mikroprozessor verwendet, um Daten zur Speicherung in dem Datenspeicher des Batterieblocks bereitzustellen oder die im Datenspeicher vorhandenen Daten auszulesen. Es steht somit ein Batterie-Kontrollgerät mit allen aus dem Stand der Technik bekannten Funktionen zur Verfügung, das keinen zusätzlichen Mikroprozessor erfordert. Der in dem Batterieblock vorgesehene Datenspeicher stellt gegenüber einem Flurförderzeug ohne Batterie-Kontrollgerät das einzige zusätzlich erforderliche elektronische Bauteil dar. Diese Reduzierung der Anzahl der erforderlichen Bauteile fällt besonders deshalb stark ins Gewicht, weil in vielen Betrieben die Anzahl der vorhandenen Batterieblöcke weitaus größer ist, als die Anzahl der Flurförderzeuge.

Der bei einem Auswechseln des Batterieblocks entstehende Aufwand wird minimiert, wenn das Antriebssystem und der Batterieblock mittels einer einzigen Kupplung-Stecker-Verbindung miteinander verbindbar sind. Es werden also sowohl die zum Antrieb des Flurförderzeugs benötigte elektrische Leistung, als auch die Daten zwischen der Steuereinheit und dem Datenspeicher über die gemeinsame KupplungStecker-Verbindung übertragen. Hierbei ist es möglich, daß die Kupplung-Stecker-Verbindung getrennte Kontakte für die Daten- und Leistungsübertragung aufweist. Möglich ist es ebenfalls, daß für die Daten- und Leistungsübertragung die selben Leitungen und Kontakte verwendet werden.

Eine Daten- und Leistungsübertragung über die selben Leitungen kann dadurch ermöglicht werden, daß eine Übertragung von Daten genau dann erfolgt, wenn die zwischen der Batterie und der Steuereinheit übertragene elektrische Leistung zumindest annähernd gleich Null ist. Die Datenübertragung findet beispielsweise dann statt, wenn das Flurförderzeug nicht bewegt wird oder sich außer Betrieb befindet.

Gemäß einer zweckmäßigen Ausgestaltung ist der Datenspeicher in dem zu dem Batterieblock gehörenden Teil der Kupplung-Stecker-Verbindung angeordnet. Der Datenspeicher kann hier in einfacher Weise geschützt innerhalb eines Kunststoffgehäuses angeordnet werden. Darüber hinaus kann auf zusätzliche elektrische Leitungen im Bereich des Batterieblocks verzichtet werden.

Die Steuereinheit weist zur Versorgung der Antriebsaggregate des Flurförderzeugs eine Impulssteuerung auf Die Impulssteuerung stellt die Leistungselektronikeinheit der Steuereinheit dar.

In dem Datenspeicher können eine oder mehrere der nachfolgend aufgeführten Daten gespeichert werden, die mittels der Steuereinheit zumindest lesbar sind:
- Herstellungsdatum des Batterieblocks,
- Kennzeichnung des Batterietyps,
- Kennzeichnung der Ladekennlinie des Batterieblocks,
- Batteriehersteller,
- Batteriekapazität,
- Seriennummer des Batterieblocks.

Diese Daten stehen mit der Herstellung bzw. der Inbetriebnahme des Batterieblocks fest und werden hierbei in den Datenspeicher geschrieben. Während des Betriebs des Flurförderzeugs und der sich wiederholenden Ladevorgänge des Batterieblocks werden diese Daten durch die Steuereinheit lediglich gelesen, jedoch nicht mehr verändert.

Besondere Vorteile ergeben sich, wenn in dem Datenspeicher eine oder mehrere der nachfolgend aufgeführten Daten gespeichert sind, die mittels der Steuereinheit lesbar und schreibbar sind:
- Inbetriebnahmedatum des Batterieblocks,
- aus der Batterie seit deren Inbetriebnahme entnommene Elektrizitätsmenge,
- höchste und/oder niedrigste aufgetretene Batterietemperatur,
- Anzahl und/oder Umfang von Tiefentladungen des Batterieblocks,
- Anzahl der Befüllungsvorgänge mit Batterieflüssigkeit.

Diese Daten können von der Steuereinheit gelesen und gegebenenfalls aktualisiert werden.

Die Steuereinheit paßt die Stromentnahme aus der Batterie sowie die Ladevorgänge in Abhängigkeit von allen in dem Datenspeicher enthaltenen Daten an. Durch diese kontinuierliche Anpassung des Stromflusses an den Zustand des Batterieblocks kann die Lebensdauer des Batterieblocks erhöht werden. Wenn bei einem Anwender mehrere erfindungsgemäße Flurförderzeugen im Einsatz sind, wird eine Optimierung der Lebensdauer der verschiedenen Batterieblöcke erreicht, wenn alle Flurförderzeuge mit einer erfindungsgemäßen Steuervorrichtung ausgerüstet sind. Die Batterieblöcke können dann auch zwischen den einzelnen Flurförderzeugen getauscht werden.

Weitere Vorteile und Einzelheiten der Erfindung werden anhand des in der schematischen Figur dargestellten Ausführungsbeispiels näher erläutert.

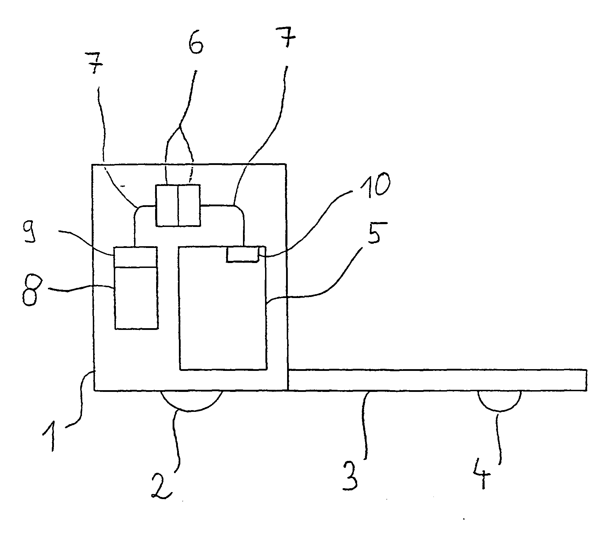

Die Figur zeigt als erfindungsgemäßes Flurförderzeug einen Niederhubwagen. Ein nicht anhebbarer Antriebsteil 1 steht mit einem Antriebsrad 2 und mindestens einer nicht dargestellten Schwenkrolle auf einer Fahrbahn auf. An dem Antriebsteil 1 ist ein Lastteil 3 höhenbeweglich befestigt, der mit zwei Lastrollen 4 an der Fahrbahn abgestützt ist. Die Bedienung des Flurförderzeugs erfolgt beispielsweise mittels einer nicht dargestellten Lenkdeichsel.

Innerhalb des Antriebsteils 1 ist ein Batterieblock 5 angeordnet, der mit einer geeigneten Vorrichtung aus dem Flurförderzeug entfernt werden kann. Bekannt sind hierzu Lösungen, bei denen der Batterieblock 5 mittels eines Krans nach oben aus dem Antriebsteil 1 gehoben wird. Ebenfalls möglich ist es, in dem Antriebsteil 1 eine seitliche Öffnung vorzusehen, durch welche der Batterieblock mittels einer Rollenbahn geschoben werden kann.

Mittels elektrischer Leitungen 7 und einer Kupplung-Stecker-Verbindung 6 ist der Batterieblock 5 mit einer Steuereinheit 8 des Flurförderzeugs verbunden. Erfindungsgemäß ist ein Mikroprozessor 9 vorgesehen, der Teil der Steuereinheit 8 ist. In dem Batterieblock 5 ist erfindungsgemäß ein Datenspeicher 10 vorgesehen. Zwischen dem Mikroprozessor 9 und dem Datenspeicher 10 können über die Leitungen 7 und die Kupplung-Stecker-Verbindung 6 Daten übertragen werden.

In dem Datenspeicher 10 sind Informationen über die Art, das Alter, die Herkunft und den Zustand des Batterieblocks 5 enthalten. Diese Daten werden von dem Mikroprozessor 9 der Steuereinheit 8 gelesen und ausgewertet. Ein Ladevorgang wird aufgrund dieser Daten durch den Mikroprozessor 9 im Hinblick auf eine Maximierung der Lebensdauer der Batterieblocks 5 optimiert. Gleiches gilt für eine Stromentnahme aus dem Batterieblock 5 während des Betriebs des Flurförderzeugs. Hier werden insbesondere Tiefentladungen des Batterieblocks 5 vermieden, um eine lange Lebensdauer sicherzustellen. Diejenigen im Datenspeicher 10 enthaltenen Daten, die sich während des Betriebs verändern, werden durch den Mikroprozessor 9 laufend aktualisiert.

Die Datenübertragung erfolgt beispielsweise zu einem Zeitpunkt, wenn über die Leitungen 7 keine elektrische Energie für den Antrieb des Flurförderzeugs übertragen wird. Es können damit für die Leistungsübertragung und für die Datenübertragung die selben elektrischen Leitungen 7 verwendet werden.

## Patentansprüche

1. Flurförderzeug mit einem elektrischen Antriebssystem und einem wiederaufladbaren Batterieblock (5), wobei das Antriebssystem eine Steuereinheit (8) aufweist, welche Steuereinheit (8) eine Leistungselektronikeinheit zur Versorgung von Antriebaggregaten und einen Mikroprozessor (9) zur Ansteuerung der Leistungselektronikeinheit umfasst, und der Batterieblock (5) einen Datenspeicher (10) aufweist, **dadurch gekennzeichnet, daß** das Antriebssystem derart mit dem Batterieblock (5) verbindbar ist, daß die in dem Datenspeicher (10) enthaltenen Daten mittels der Steuereinheit (8) lesbar sind und der Datenspeicher (10) durch Signale der Steuereinheit (8) beschreibbar ist.

2. Flurförderzeug nach Anspruch 1, **dadurch gekennzeichnet, daß** das Antriebssystem und der Batterieblock (5) mittels einer einzigen Kupplung-Stecker-Verbindung (6) miteinander verbindbar sind.

3. Flurförderzeug nach Anspruch 1 oder 2, **dadurch gekennzeichnet, daß** die Steuereinheit (8) derart ausgeführt ist, daß eine Übertragung von Daten genau dann erfolgt, wenn die zwischen der Batterie und der Steuereinheit (8) übertragene elektrische Leistung zumindest annähernd gleich Null ist.

4. Flurförderzeug nach Anspruch 2 oder 3, **dadurch gekennzeichnet, daß** der Datenspeicher (10) in dem zu dem Batterieblock (5) gehörenden Teil der Kupplung-Stecker-Verbindung (6) angeordnet ist.

5. Flurförderzeug nach einem der Ansprüche 1 bis 4, **dadurch gekennzeichnet, daß** die Steuereinheit (8) zur Versorgung der Antriebsaggregate des Flurförderzeugs eine Impulssteuerung aufweist.

6. Flurförderzeug nach einem der Ansprüche 1 bis 5, **dadurch gekennzeichnet, daß** in dem Datenspeicher (10) eine oder mehrere der nachfolgend aufgeführten Daten gespeichert sind, die mittels der Steuereinheit (8) zumindest lesbar sind:
- Herstellungsdatum des Batterieblocks,
- Kennzeichnung des Batterietyps,
- Kennzeichnung der Ladekennlinie des Batterieblocks,
- Batteriehersteller,
- Batteriekapazität.

7. Flurförderzeug nach einem der Ansprüche 1 bis 5, **dadurch gekennzeichnet, daß** in dem Datenspeicher (10) eine oder mehrere der nachfolgend aufgeführten Daten gespeichert sind, die mittels der Steuereinheit (8) lesbar und schreibbar sind:
- Inbetriebnahmedatum des Batterieblocks,
- aus dem Batterieblock seit dessen Inbetriebnahme entnommene Elektrizitätsmenge,
- höchste und/oder niedrigste aufgetretene Batterietemperatur,
- Anzahl und/oder Umfang von Tiefentladungen des Batterieblocks,
- Anzahl der Befüllungsvorgänge mit Batterieflüssigkeit.

## Claims

1. Industrial truck with an electric drive system and a rechargeable battery pack (5), the drive system having a control unit (8), which control unit (8) comprises a power electronics unit for the purpose of supplying drive assemblies and a microprocessor (9) for the purpose of driving the power electronics unit, and the battery block (5) having a data memory (10), **characterized in that** the drive system can be connected to the battery pack (5) such that the data contained in the data memory (10) can be read by means of the control unit (8) and the data memory (10) can be written to by signals from the control unit (8).

2. Industrial truck according to Claim 1, **characterized in that** the drive system and the battery pack (5) can be connected to one another by means of a single coupler plug connection (6).

3. Industrial truck according to Claim 1 or 2, **characterized in that** the control unit (8) is designed such that transmission of data takes place precisely when the electric power transmitted between the battery and the control unit (8) is at least approximately equal to zero.

4. Industrial truck according to Claim 2 or 3, **characterized in that** the data memory (10) is arranged **in that** part of the coupler plug connection (6) which is associated with the battery pack (5).

5. Industrial truck according to one of Claims 1 to 4, **characterized in that** the control unit (8) for supplying the drive assemblies of the industrial truck has a pulse controller.

6. Industrial truck according to one of Claims 1 to 5, **characterized in that** one or more of the data listed below are stored in the data memory (10) and can at least be read by means of the control unit (8):
- date of manufacture of the battery pack,
- identification of the battery type,
- identification of the charging characteristic of the battery pack,
- battery manufacturer,
- battery capacity.

7. Industrial truck according to one of Claims 1 to 5, **characterized in that** one or more of the data listed below are stored in the data memory (10) and can be read and written by means of the control unit (8):
- date of first use of the battery pack,
- amount of electricity drawn from the battery pack since its first use,
- highest and/or lowest attained battery temperature,
- number and/or extent of exhaustive discharges of the battery pack,
- number of filling operations with battery liquid.

## Revendications

1. Chariot de manutention muni d'un système d'entraînement électrique et d'un bloc de batterie (5) rechargeable, le système d'entraînement présentant une unité de commande (8), laquelle unité de commande (8) comprenant une unité électronique de puissance pour alimenter des groupes d'entraînement et un microprocesseur (9) pour commander l'unité électronique de puissance, et le bloc de batterie (5) présentant une mémoire de données (10), **caractérisé en ce que** le système d'entraînement peut être relié avec le bloc de batterie (5) de telle sorte que les données contenues dans la mémoire de données (10) peuvent être lues au moyen de l'unité de commande (8) et la mémoire de données (10) peut être écrite par des signaux de l'unité de commande (8).

2. Chariot de manutention selon la revendication 1, **caractérisé en ce que** le système d'entraînement et le bloc de batterie (5) peuvent être reliés entre eux au moyen d'une unique liaison mâle/femelle (6).

3. Chariot de manutention selon la revendication 1 ou 2, **caractérisé en ce que** l'unité de commande (8) est réalisée de telle sorte qu'une transmission de données a lieu exactement lorsque la puissance électrique transmise entre la batterie et l'unité de commande (8) est au moins approximativement égale à zéro.

4. Chariot de manutention selon la revendication 2 ou 3, **caractérisé en ce que** la mémoire de données (10) est logée dans la partie de la liaison mâle/femelle (6) appartenant au bloc de batterie (5).

5. Chariot de manutention selon l'une des revendications 1 à 4, **caractérisé en ce que** l'unité de commande (8) présente une commande par impulsions pour alimenter les groupes d'entraînement du chariot de manutention.

6. Chariot de manutention selon l'une des revendications 1 à 5, **caractérisé en ce qu'**une ou plusieurs des données mentionnées ci-après sont enregistrées dans la mémoire de données (10) et peuvent être au moins lues au moyen de l'unité de commande (8) :
- date de fabrication du bloc de batterie,
- identification du type de batterie,
- identification de la courbe de charge du bloc de batterie,
- fabricant de la batterie,
- capacité de la batterie.

7. Chariot de manutention selon l'une des revendications 1 à 5, **caractérisé en ce qu'**une ou plusieurs des données mentionnées ci-après sont enregistrées dans la mémoire de données (10) et peuvent être lues et écrites au moyen de l'unité de commande (8) :
- date de mise en service du bloc de batterie,
- quantité d'électricité prélevée du bloc de batterie depuis sa mise en service,
- température maximale et/ou minimale à laquelle a été exposée la batterie,
- nombre et/ou étendue des décharges totales du bloc de batterie,
- nombre d'opération de remplissage avec du liquide pour batterie.
